# EUROPÄISCHE PATENTSCHRIFT

(11) **EP 1 137 470 B1**
(45) Veröffentlichungstag und Bekanntmachung des Hinweises auf die Patenterteilung: **27.02.2008**
(21) Anmeldenummer: 00972583.9
(22) Anmeldetag: 11.09.2000
(51) Int. Cl.: B01D 29/21, B01D 35/147, B01D 35/153, B01D 35/16

(54) **FLUIDFILTER MIT GEHÄUSEFESTEM ABLASSDOM**
FLUID FILTER WITH A DISCHARGE DOME THAT IS FIXED TO THE HOUSING
FILTRE A FLUIDE COMPORTANT UN DOME D'EVACUATION

(30) Priorität: 09.09.1999 DE 29915841 U; 06.10.1999 DE 29917563 U
(43) Veröffentlichungstag der Anmeldung: 04.10.2001
(73) Patentinhaber: Hengst GmbH & Co. KG, 48147 Münster (DE)
(72) Erfinder: BAUMANN, Dieter, 48268 Greven (DE); ARDES, Wilhelm, 59387 Ascheberg (DE)
(74) Vertreter: Habbel, Ludwig
(86) Internationale Anmeldenummer: PCT/DE2000/003124
(87) Internationale Veröffentlichungsnummer: WO 2001/017657

(56) Entgegenhaltungen:
- EP-A- 0 839 563
- DE-A- 3 432 855
- DE-A- 4 303 694
- DE-C- 19 612 689
- DE-U- 29 610 290
- DE-U- 29 915 843
- JP-A- 9 010 515

## Beschreibung

Die Erfindung betrifft einen Filter nach dem Oberbegriff des Anspruchs 1.

Ein derartiger Filter ist aus der JP-A-09,010,515 bekannt. Beim Auswechseln des Filtereinsatzes öffnet ein Rücklauf-Sperrventil, so dass das Rohfluid des Filters über einen rohseitigen Zulaufkanal ablaufen kann. Ein solcher Zulaufkanal ist stets auf der Druckseite einer Fluidpumpe angeordnet, so dass also das Fluid durch die Fluidpumpe ablaufen muss. Dies erfolgt aufgrund der geringen Spaltmaße in der Fluidpumpe sehr langsam, so dass währenddessen nicht auszuschließen ist, dass mit Verschmutzungen beladenes Rohfluid, welches sich noch im Filtergehäuse befindet, auf die Reiseite des Filters gelangen kann und beispielsweise bei einem Ölfilter über die Auslassleitung abfließt, über welche das gefilterte Reinöl zu den Schmierstellen gelangen soll. Eine zusätzliche, eigens für den Filterwechsel vorgesehene Ablaufleitung vorzusehen, über welche das Rohfluid bei geöffnetem Rücklauf-Sperrventil möglichst schnell, also ohne Gegendruck auf die Rohseite abfließen kann, würde einen zusätzlich Platzbedarf verursachen.

Aus der DE-U1-34 32 855 ist ein Filter bekannt; bei dem der Filtereinsatz gemeinsam mit dem Filtergehäuse einen Wechselfilter bildet, welcher regelmäßig ausgewechselt wird. Hierzu ist ein Schraubanschluss auf einem Anschraubstutzen vorgesehen. Beim Filterwechsel wird daher nahezu zwangsläufig Abrieb erzeugt werden. Da das Schraubgewinde innerhalb des Reinölauslasses vorgesehen ist, bestehet auch bei diesem Filter die Gefahr, dass dieser Abrieb anschließend zu den Schmierstellen gelangen kann.

Aus der DE-A1-196 35 777 ist ein Ölfilter als Baugruppe für eine Brennkraftmaschine bekannt, bei welcher ebenfalls das im Filtergehäuse befindliche Rohfluid in den Reinölauslass gelangen kann, wenn der Filtereinsatz ausgewechselt wird.

Aus der DE-U1-296,10,290 ist ein Filter mit federbeaufschlagtem, filtergehäusefestem Ablassventil bekannt, welches durch den Filtereinsatz in seiner Schließstellung gehalten wird und bei Öffnung des Filters bzw. bei Ausbau des Filtereinsatzes durch Federdruck geöffnet wird.

Aus der DE-U1-94,11,212 ist ein Filter bekannt, bei dem die Ablassöffnungdurch durch eine Schraube verschlossen wird.

Ein derartiger Filter ist aus der DE-C2-34,09,219 bekannt.

Der Erfindung liegt die Aufgabe zugrunde, eine möglichst kostengünstige und platzsparende Ausgestaltung eines gattungsgemäßen Filters zu ermöglichen.

Diese der Erfindung zugrundeliegende Aufgabe wird durch einen Filter mit den Merkmalen des Anspruches 1 oder 2 gelöst.

Die Erfindung schlägt mit anderen Worten vor, den Ablassdom nicht als Bauteil auszugestalten, welches Teil des auswechselbaren Filtereinsatzes ist, sondern dieses Bauteil gehäusefest auszugestalten, so dass der Ablassdom stets am Filter verbleibt. Dies ermöglicht eine platzsparende Verpackung für die eigentlichen Filtereinsätze, da deren Bauhöhe um das Maß verringert wird, welches bei den gattungsgemäßen Filtern als an das eigentliche Filtermedium noch axial anschließender Verschlußdorn vorgesehen ist. Die separaten Ablassdome selbst weisen einen erheblich geringeren Durchmesser als die Filtereinsätze auf und können daher bei Lieferung an einen Motorenhersteller entweder getrennt von den Filtereinsätzen erheblich platzsparender verpackt werden, oder sie können ggf. im Innenraum des Filtereinsatzes, ohne die Notwendigkeit einer eigenen, zweiten Verpackung angeordnet werden, so dass insgesamt ein platzsparender und materialsparender, insgesamt preisgünstiger Versand der Filtereinsätze möglich ist.

Insbesondere bei der Ersatzteilversorgung wirkt sich dieser Preisvorteil aus, da dann einerseits wiederum die platz- und damit kostensparende Versendung der Ersatz-Filtereinsätze möglich ist und zudem der Materialanteil des Ablassdoms komplett eingespart werden kann, da dieser gehäusefest am Filter verbleibt, so dass hierdurch die Ersatzteilkosten auf zweifache Weise verringert werden können.

Eine weitere Kosteneinsparung bei der Herstellung eines erfindungsgemäßen Filters ergibt sich dadurch, dass der Ablassdom nicht nur den Ablassverschluß ausbildet, sondern dass er mit einer zweiten Ventilfunktion versehen ist. Diese kann das an sich bekannte Filterumgehungsventil darstellen, welches bei Überdruck einen Fluidstrom unter Umgehung des Filtermediums ermöglicht, oder ein Rücklauf-Sperrventil, welches bei stillstehendem Motor einen Rückfluß des Öls in das Kurbelgehäuse und damit eine Entleerung des Filtergehäuses verhindert.

Bei den gattungsgemäßen Filtern wird die Ablassleitung durch die Entnahme des Filtereinsatzes geöffnet, da zusammen mit dem Filtereinsatz auch der Ablassdom aus dem Filtergehäuse herausgezogen wird. Erfindungsgemäß wird genau die gleiche gemeinsame Bewegung von Filtereinsatz und Ablassdom bewirkt, indem der Ablassdom federunterstützt in seine Freigabestellung verfährt, wenn die Feder entlastet wird. Diese Feder wird komprimiert, wenn der Filtereinsatz in das Filtergehäuse eingesetzt und der Deckel des Filtergehäuses geschlossen wird, und dabei wird der Ablassdom in seine Schließstellung bewegt

Insbesondere kann vorgesehen sein, dass auf besonders einfache und bauteilsparende Weise die vorschlagsgemäß vorgesehene zusätzlichen Ventilfunktionen durch die axiale Verstellbarkeit des Ablassdomes gesteuert werden. Auf diese Weise kann mit besonders wenig Bauteilen der Ablassdom hergestellt und die darin verwirklichten Ventilfunktionen besonders kostengünstig verwirklicht werden und es können beim Anwender, beispielsweise im Automobilwerk, Montageschritte eingespart werden, um die verschiedenen, für die jeweiligen Ventilfunktionen vorgesehenen Ventile innerhalb eines Filters zu montieren.

Besonders preisgünstig kann dabei vorgesehen sein, dass die zusätzlichen Ventile nicht bereits im Auslieferungszustand des Ablassdomes funktionsfähig sind, sondern lediglich einen Ventilkörper aufweisen, der erst im Zusammenwirken mit einer zusätzlichen, vom Ablassdom unabhängigen Dichtfläche ein funktionsfähiges Ventil bildet. Auf diese Weise kann die Montage des Ventilkörpers auf besonders einfache und kostengünstige Weise, nämlich optimal zugänglich, erfolgen.

Vorteilhaft kann in an sich bekannter Weise ein Stützdom innerhalb des Filtereinsatzes vorgesehen sein, so dass der auswechselbare Filtereinsatz mit besonders wenig Material hergestellt sein kann und sich sein Filtermedium an den im Filter verbleibenden, dauerhaft installierten Stützdom anlegen kann. Dieser Stützdom kann vorteilhaft als Verlängerung bzw. axiale Fortführung des Ablassdomes ausgestaltet sein, so daß möglichst wenig Bauteile hergestellt werden und gehandhabt werden müssen, was die Herstellungskosten und die Montage günstig beeinflußt. Insbesondere wird durch die damit bewirkte Verlängerung des Ablassdomes die Möglichkeit eröffnet, ein Filterumgehungsventil an der Seite des Ventileinsatzes vorzusehen, die der Ablassöffnung gegenüberliegend angeordnet ist.

Bei Ausbildung des Stützdomes als Verlängerung des Ablassdomes kann in bestimmten Fällen vorteilhaft sein, den Dorn zweiteilig auszugestalten, so daß bei Herstellung einer "Produktfamilie" von Filtern ein stets gleiches Basisteil, welches den Ablassdom aufweist, hergestellt wird und lediglich in Abhängigkeit von unterschiedlichen Bauhöhen der Filtergehäuse und der Filtereinsätze entsprechend unterschiedlich lange Teile mit dem stets gleichen Basisteil verbunden werden, um auf diese Weise jeweils die ausreichende Stützwirkung des Stützdomes sicherzustellen.

Ausführungsbeispiele der Erfindung werden anhand der Zeichnungen im folgenden näher erläutert. Dabei zeigen die
- Fig. 1a - 1d: ein erstes Ausführungsbeispiel in unterschiedlichen Betriebszuständen, die
- Fig. 2a, 2b 3a, 3b: zwei weitere Ausführungsbeispiele in unterschiedlichen Betriebszuständen, und die
- Fig. 4 bis 9: jeweils weitere Ausführungsbeispiele.

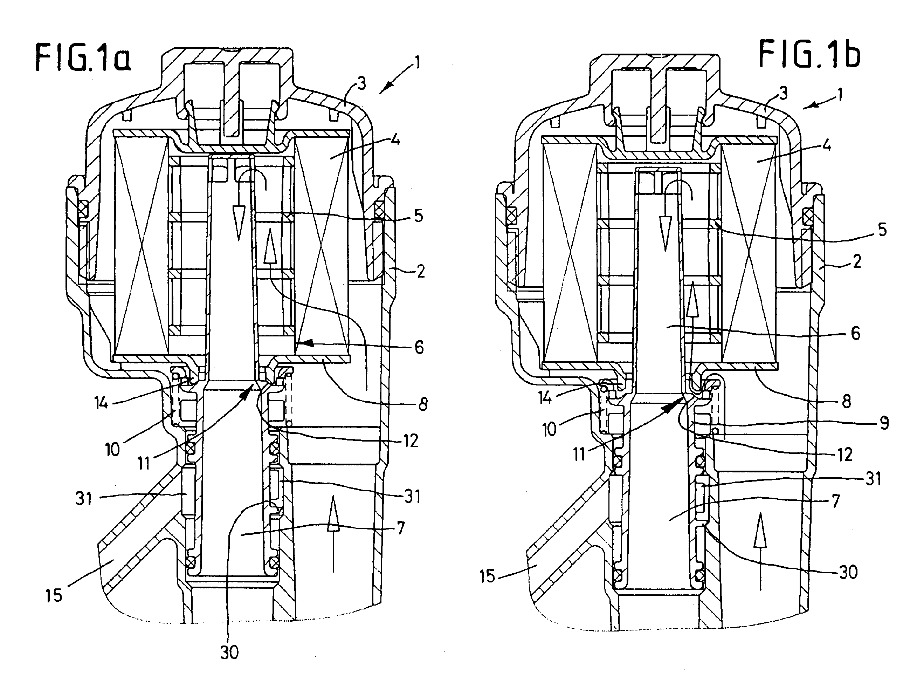

In Fig. 1a ist mit 1 allgemein ein Filter bezeichnet, der als Ölfilter für eine Verbrennungskraftmaschine vorgesehen ist. Der Filter 1 weist ein auch als Sockel bezeichnetes Filtergehäuse 2 auf sowie einen Deckel 3, wobei ein auswechselbarer Filtereinsatz 4 mit seiner oberen Endscheibe am Deckel 3 festgeclipst ist.

Fig. 1a stellt den Betriebszustand des Filters 1 bei laufendem Motor dar: Mit Pfeilen ist angedeutet, daß das zu reinigende Öl zunächst von unten durch einen Zulauf aufsteigt, dann durch das Filtermedium des Filtereinsatzes 4 strömt, anschließend innerhalb eines Stützdomes 5 aufwärts geleitet wird und schließlich durch Öffnungen eines Stützdomes 5 in einen Innenraum 6 des Filtereinsatzes 4 eintritt und nach unten in einen zentralen Auslaß 7 abfließt.

In Fig. 1b ist demgegenüber ein Betriebszustand des Filters 1 dargestellt, bei dem ein Filterumgehungsventil 11 geöffnet ist, so daß das Filtermedium des Filtereinsatzes umgangen wird: Zwischen einer unteren Endscheibe 8 des Filtereinsatzes 4 und einem Ablassdom 9 hat sich ein Spalt geöffnet, da beispielsweise aufgrund zu hoher Viskosität des Öls bei zu niedrigen Temperaturen oder aufgrund eines weitgehend verstopften Filtereinsatzes 4 der Überdruck des zuströmenden Öls einen bestimmten Wert erreicht hat. Durch diesen Druck ist der Ablassdom 9 gegen die Wirkung einer Feder 10 nach unten gedrückt worden, so daß sich der erwähnte Spalt geöffnet hat. Das Filterumgehungsventil 11 wird daher durch eine Dichtfläche 12 des Ablassdomes 9 sowie durch einen Kragen 14 gebildet, der an der unteren Endscheibe 8 des Filtereinsatzes 4 angeformt ist. Das Öl gelangt also ungefiltert in den Innenraum 6 und gelangt in den Stützdom 5 und den Auslaß 7.

Der Ablaßdom 9 besteht aus Kunststoff. Er weist mehrere radial nach außen vorstehende Haltefinger 30 auf, die sowohl federelastisch als auch an ihrer unteren Außenkante nach innen angeschrägt sind. So kann der Ablassdom 9 in einen am Filtersockel vorgesehenen Stutzen, der die Wandung des Auslasses 7 bildet, eingeführt werden, bis sich die Haltefinger in einer Hinterschneidung 31 dieses Stutzens entspannen, so daß der Ablassdom 9 nun in dem Stutzen zwar festgelegt, aber innerhalb der Hinterschneidung 31 höhenbeweglich gelagert ist.

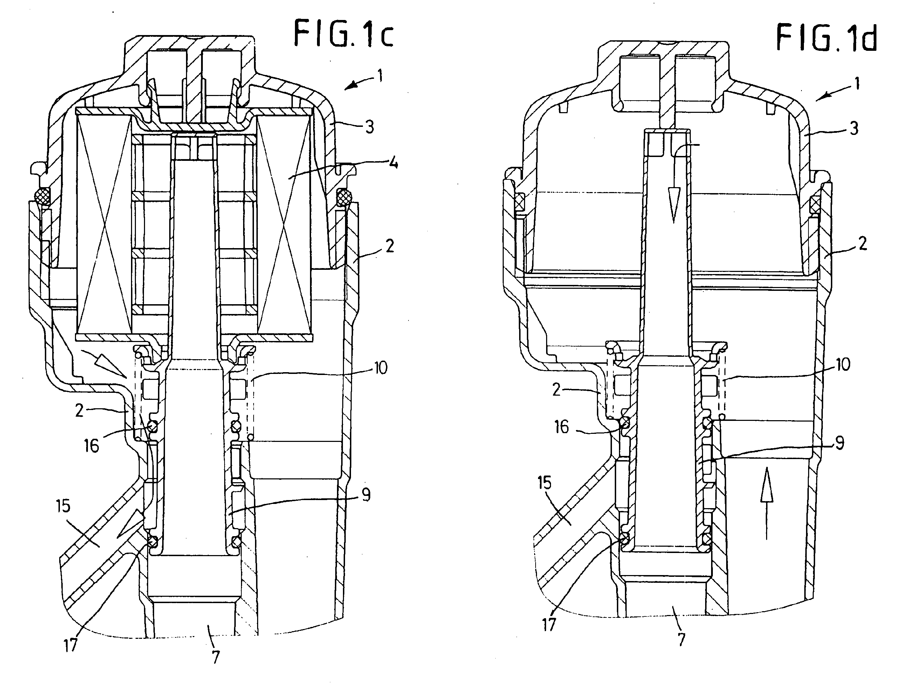

Fig. 1c zeigt einen Betriebszustand des Filters 1 während des sogenannten "Filterwechsels", bei dem tatsächlich jedoch lediglich der Filterseinsatz 4 ausgewechselt wird: Der Deckel 3 ist bereits teilweise vom Filtergehäuse 2 abgeschraubt. Aufgrund der Clipsverbindung ist dabei auch der Filtereinsatz 4 gegenüber seiner Betriebsstellung nach Fig. 1a angehoben worden, so daß sich die Feder 10 entspannt hat. Das im Filtergehäuse 2 stehende Öl kann nun radial außerhalb des Ablassdomes 9 in eine Ablassleitung 15 fließen, da der Ablassdom 9 so weit angehoben ist, daß eine Ablassdichtung 16 nun nicht mehr am Filtergehäuse 2 abdichtend anliegt. Eine Kurzschlußdichtung 17 hingegen befindet sich unterhalb der Ablassleitung 15 und liegt nach wie vor dem Filtergehäuse 2 abdichtend an, so daß ungefiltertes, noch im Filtergehäuse verbliebenes Öl nicht in den Auslaß 7 und damit zu den Schmierstellen des Motors gelangen kann.

Die Hinterschneidung 31 dient außer zur Aufnahme der Haltefinger 30 auch zur Vermeidung einer scharfen Kante dort, wo die Ablassleitung 15 in die Öffnung des Auslasses 7 mündet und wo andernfalls die Ablassdichtung 17 bei der Montage des Ablassdomes 9, wenn dieser axial bewegt und in das Filtergehäuse 2 eingesetzt wird, beschädigt werden könnte.

Fig. 1d zeigt einen nicht vorgesehenen Betriebszustand des Filters 1, bei dem dieser ohne einen Filtereinsatz verwendet wird. In diesem Fall stellt der Filter dennoch einen möglichst ordnungsgemäßen Motorbetrieb sicher: Dadurch, daß der Ablassdom 9 axial so weit verlängert ist, daß er an einem zentralen Dorn oder Steg des Deckels 3 anliegt, wird der Ablassdom gegenüber seiner in Fig. 1c dargestellten Filterwechselstellung etwas nach unten gedrückt, so daß die Ablassdichtung 16 abdichtend am Filtergehäuse 2 anliegt und auf diese Weise vermieden wird, daß das Öl in die Ablassleitung 15 gelangen kann. Vielmehr wird das Öl durch die für das gereinigte Öl vorgesehenen Öffnungen im oberen Bereich des Ablassdomes 9 geleitet und gelangt von dort in den Auslaß 7.

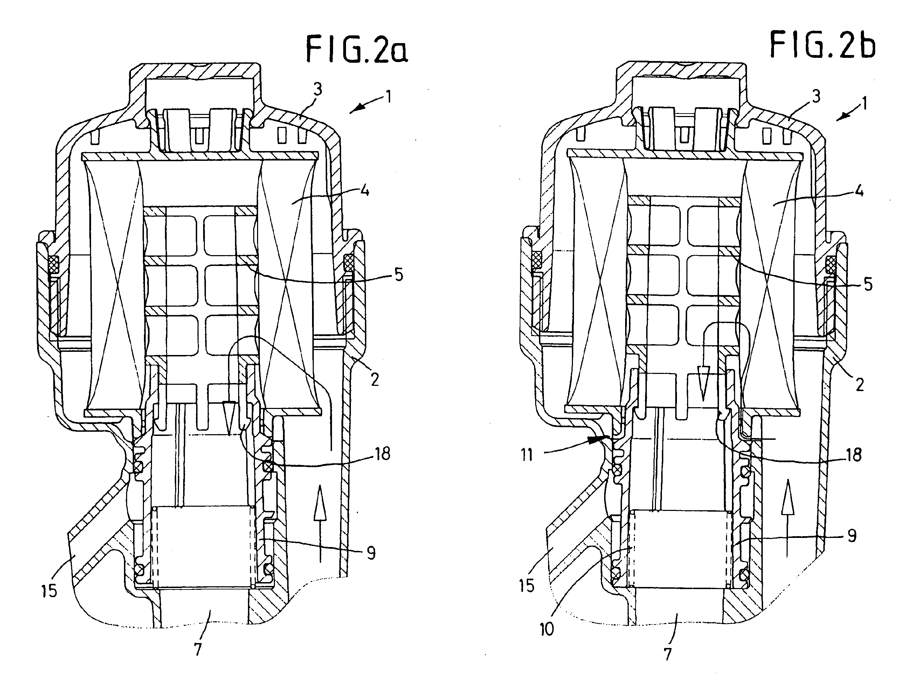

Die Fig. 2a und 2b zeigen ein zweites Ausführungsbeispiel, bei dem der Filtereinsatz 4 keinen eigenen Stützdom aufweist. Im Betriebszustand, unter den herrschenden Druck- und Temperaturverhältnissen sowie durch die Flüssigkeitsbeaufschlagung mit dem Öl erweicht das Filtermedium des Filtereinsatzes 4 und legt sich an einen filterfest vorgesehenen Stützdom 5 an, der über federelastische Krallen 18 mit dem Ablassdom 9 verbunden ist. Fig. 2a zeigt dabei den Betriebszustand des Filters 1 bei laufendem Motor, bei dem das ungefilterte Öl durch den Filtereinsatz 4 tritt und dann durch Öffnungen im Stützdom 5 in den Auslaß 7 gelangt.

Fig. 2b zeigt demgegenüber den Betriebszustand mit geöffnetem Filterumgehungsventil 11: Auch hier ist durch den im Filtergehäuse 2 herrschenden Überdruck der Ablassdom 9 nach unten abgesenkt worden, so daß das Öl zwischen den Falten des Filtereinsatzes 4 aufsteigen und durch den Stützdom 5 in den Auslaß 7 gelangen kann, ohne das Filtermedium des Filtereinsatzes 4 passieren zu müssen.Auch bei diesem Ausführungsbeispiel ist eine Feder 10 vorgesehen, die den Ablassdom 9 nach oben drückt.

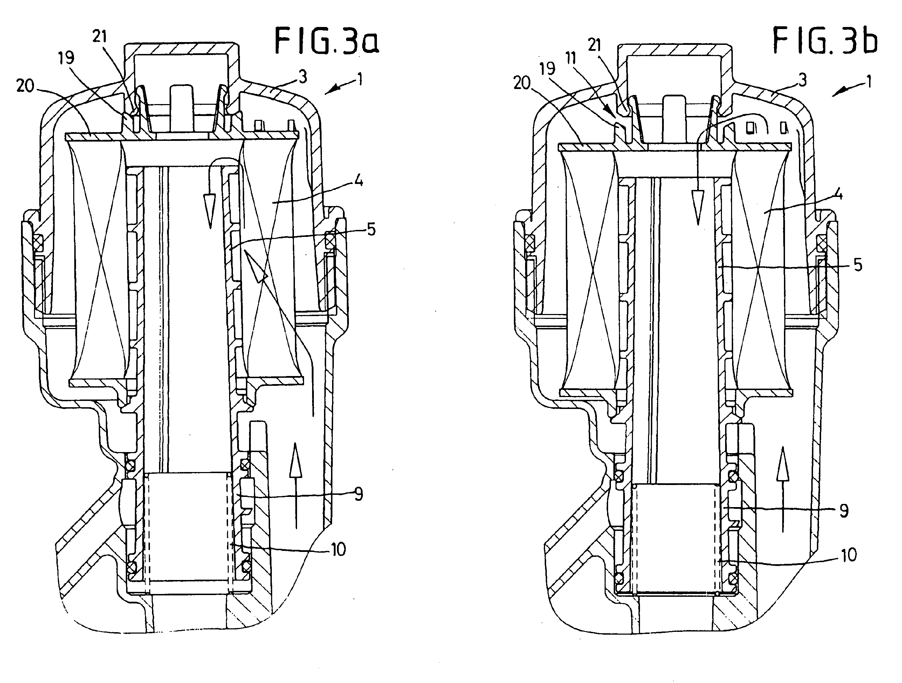

Die Fig. 3a und 3b zeigen ein drittes Ausführungsbeispiel, wobei Fig. 3a den Betriebszustand des Filters 1 bei laufendem Motor darstellt. Fig. 3b zeigt demgegenüber das Filterumgehungsventil 11, welches durch einen Kragen 19 an einer oberen Endscheibe 20 des Filtereinsatzes 4 einerseits und durch eine Dichtfläche 21 am Deckel 3 gebildet ist. Bei im Filter 1 herrschendem Überdruck wird der Filtereinsatz 4 nach unten gedrückt, so daß sich das Filterumgehungsventil 11 öffnet. Bei dieser Bewegung wird der Ablassdom 9, der einteilig im oberen Bereich auch den Stützdom 5 ausbildet, nach unten gegen die Wirkung der Feder 10 gedrückt.

Die ständigen Bewegungen des Ablassdomes 9, wie sie bei den Ausführungsbeispielen der Fig. 1 - 3 vorgesehen sind, um die Öffnung des Filterumgehungsventils 11 zu ermöglichen, üblicherweise bei jedem Kaltstart des Motors aufgrund der Ölviskosität, erfordern hochverschleißfeste Dichtungen, da der Ablassdom 9 als dauerhaft im Filter 1 verbleibendes Bauteil ausgelegt ist.

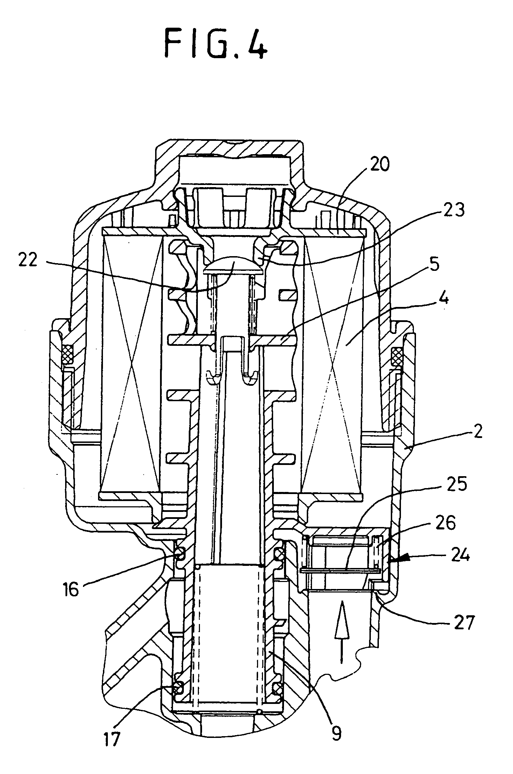

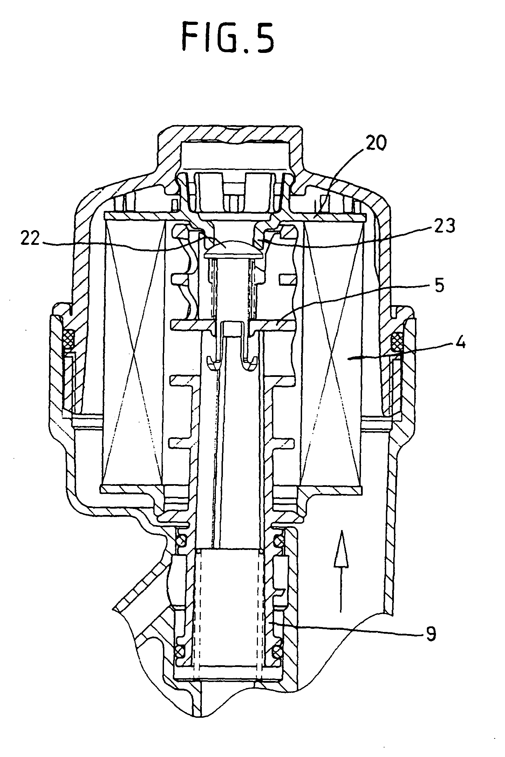

Demgegenüber zeigt Fig. 4 ein weiteres Ausführungsbeispiel der Erfindung, welches mit preisgünstigeren Dichtungen ausgestaltet werden kann, beispielsweise mit handelsüblichen O-Ringen. Die Funktion des Filterumgehungsventiles 11 ist dabei, ebenso wie in den folgenden Fig. 5 bis 7, mit einem an sich bekannten Ventilkörper 22 verwirklicht, der im oberen Bereich des Stützdomes 5 vorgesehen ist. Besonders einfach zu fertigen ist dieses Filterumgehungsventil 11 dadurch, daß der Ventilkörper 22 sehr einfach und schnell montiert werden kann, da er optimal zugänglich ist, weil er mit einer Dichtfläche 23 als Ventilsitz zusammenwirkt, die in an sich bekannter Weise von einem separaten Bauteil, nämlich der oberen Endscheibe 20 des Filtereinsatzes 4 gebildet wird, so daß ein funktionsfähiges Ventil erst bei der Endmontage des gesamten Filters 1 geschaffen wird und nicht bereits bei der Vormontage einzelner Baugruppen erstellt werden muß.

Der Ablassdom 9 des Ausführungsbeispieles von Fig. 4 trägt ein Rücklauf-Sperrventil 24, welches eine schematisch angedeutete Ventilklappe 25 aufweist, die gegen die Wirkung einer Feder 26 durch das von unten zuströmende Öl geöffnet wird und bei Motorstillstand in ihrer Schließstellung das Rückströmen des Öls aus dem Innenraum des Filtergehäuses 2 verhindert. Fig. 4 zeigt den Betriebszustand des Filters 1 bei laufendem Motor, bei dem die Ventilklappe 25 geöffnet ist.

Auch die Montage des Rücklauf-Sperrventiles 24 wird dadurch erleichtert und preisgünstiger, daß auch dieses Ventil mit einer Dichtfläche 27 als Ventilsitz zusammenwirkt, die vom Verschlußdorn 9 unabhängig ist, so daß bei der Montage eine optimale Erreichbarkeit und Zugänglichkeit der Ventilklappe 25 und der Feder 26 gewährleistet ist und erst beim Einbau des Ablassdomes 9 in das Filtergehäuse 2 die Funktionsfähigkeit des Rücklauf-Sperrventiles 24 durch Anlage der Ventilklappe 25 an der gehäuseseitig vorgesehenen Dichtfläche 27 bewirkt wird.

Bei diesem Ausführungsbeispiel der Fig. 4 sind am Ablassdom in hoher Integrationsdichte die Funktionen sowohl des Ablass-Ventils als auch des Filterumgehungs-Ventils als auch des Rücklauf-Sperrventils verwirklicht, so daß hier für den Anwender, beispielsweise bei einem Motorenhersteller oder im Automobilwerk, ein besonders einfache und schnelle Montage durch ein hochkomplexes, vorgefertigt angeliefertes Bauteil ermöglicht wird. Dadurch, daß sich bei dieser Ausführungsform mit dem separaten Ventilkörper 22 der Ablassdom 9 nicht für die Funktion als Filterumgehungsventil ständig hin- und herbewegen muß, kann hier die vergleichsweise preisgünstigere Dichtung im Bereich der Ablassdichtung 16 und der Kurzschlußdichtung 17 verwendet werden.

Fig. 5 zeigt ein ähnliches Ausführungsbeispiel mit einem demgegenüber preisgünstigeren Ablassdom 9 ohne Rücklauf-Sperrventil.

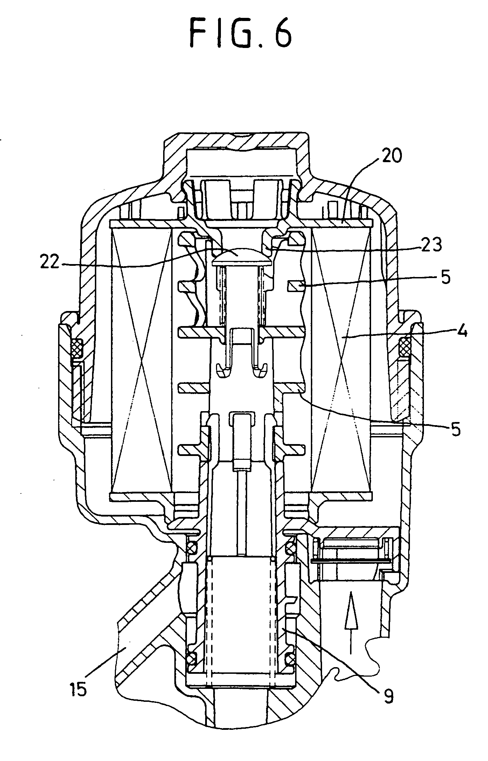

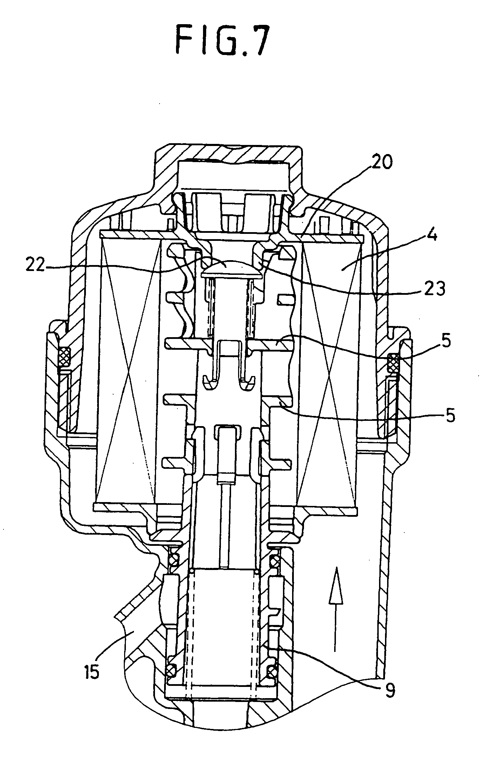

Das Ausführungsbeispiel der Fig. 6 entspricht im wesentlichen dem der Fig. 4 und das der Fig. 7 im wesentlichen dem der Fig. 5, jedoch ist hier jeweils eine zweiteilige Ausgestaltung des Ablassdomes 9 vorgesehen.

Dieser zweiteilige Ablassdom 9 kann bei grundsätzlich ähnlichen Filtern verwendet werden, die in Anpassung an unterschiedliche Motortypen unterschiedliche Filtergrößen aufweisen können und zu diesem Zweck Filtereinsätze mit unterschiedlicher Bauhöhe aufweisen. In Anpassung an diese jeweilige Bauhöhe kann der obere Teil, der den Stützdom 5 ausbildet, ausgestaltet sein, so daß mit einfachen Mitteln und geringen Werkzeugkosten unterschiedliche Ablassdome 9 mit unterschiedlichen Gesamtlängen herstellbar sind.

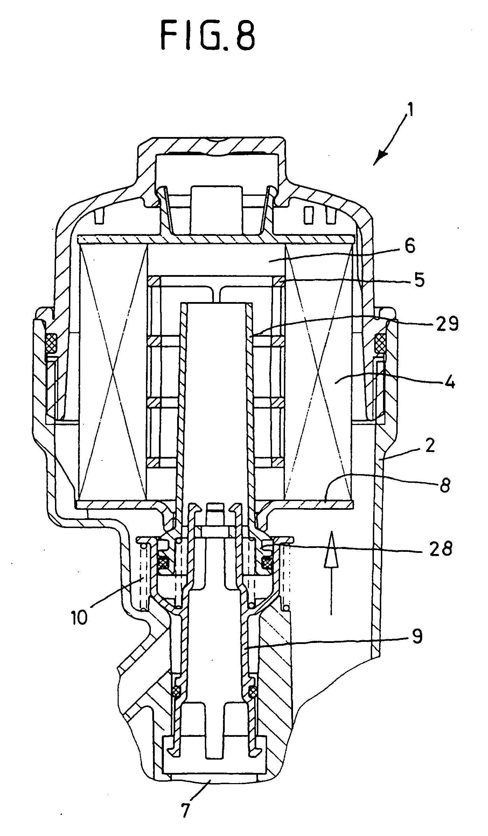

Fig. 8 schließlich zeigt ein Ausführungsbeispiel, bei dem die Funktion des Filterumgehungsventiles nicht durch den Ablassdom 9 selbst ausgebildet wird sondern durch einen separaten Ventilkörper 28. Bei Überdruck innerhalb des Filtergehäuses 2 wird der Ventilkörper 28 nach unten gedrückt, so daß er sich von der unteren Endscheibe 8 entfernt und das ungefilterte Öl in den Innenraum 6 gelangen und von diesem in den Auslaß 7 strömen kann.

Der Ventilkörper 28 ist nach oben verlängert und bildet dort ein Trennrohr 29 aus, wie dies ähnlich auch bei dem Ausführungsbeispiel der Fig. 1 ersichtlich ist. Das Trennrohr 29 bewirkt bei Motorstillstand, daß nicht sämtliches im Filtergehäuse 2, insbesondere im Innenraum 6 befindliches Öl in den Auslaß 7 strömen kann, so daß stets eine gewisse Mindestölmenge im Filter 1 sichergestellt ist.

Die bislang erläuterten Ausführungsbeispiele betreffen Filtertypen, bei denen der Ablaß stets dezentral angeordnet ist, also radial außerhalb des Auslasses verläuft, beispielsweise achsparallel oder schräg wie die dargestellten Ablassleitungen 15. Demgegenüber sind für bestimmte Einbausituationen auch Filter mit einem sogenannten zentralen Ablaß bekannt. Dabei strömt das Öl zunächst in einem eigenen, innerhalb der Auslaßöffnung vorgesehenen Strömungskanal, der z. B. koaxial um den eigentlichen Auslaßkanal, durch eine Trennwand abgetrennt, verläuft und der anschließend vom Auslaß abzweigt. Auch derartige Filter mit zentralem Auslaß können vorteilhaft erfindungsgemäß ausgestaltet sein.

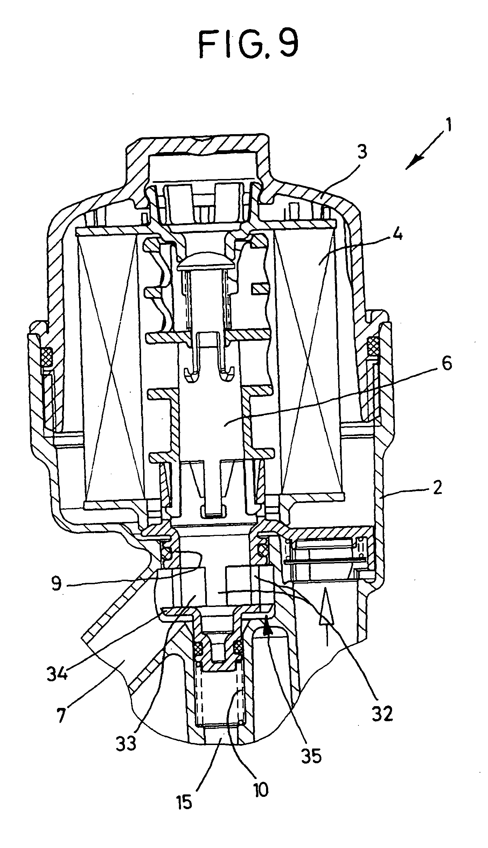

Das in Fig. 9 dargestellte Ausführungsbeispiel zeigt einen solchen Filter 1 mit einer zentralen Ablassleitung 15. Der Ablassdom 9 weist mehrere durch Stege 32 voneinander getrennte Fenster 33 auf, durch die gefiltertes Reinöl in den Auslaß 7 gelangt. Das untere Ende des Ablassdomes 9 ist geschlossen.

Bei einem Filterwechsel, also einem Wechsel des Filtereinsatzes 4, wird der Deckel 3 angehoben. Dabei entspannt sich die Feder 10 und hebt den Ablassdom 9 in eine Stellung, in der das untere Ende des Ablassdomes 9 soweit angehoben ist, daß es die Ablassleitung 15 nicht mehr abdichtend verschließt. Ein umlaufender Kranz 35 besteht aus mehreren den Ablassdom 9 im Filtergehäuse 2 haltenden Rasthaken 34, wobei durch die Aussparungen zwischen den Rasthaken 34 Öl aus dem Innenraum 6 seitlich am unteren Ende des Ablassdomes 9 vorbei in die Ablassleitung 15 abfließen kann.

## Patentansprüche

1. Fluidfilter, wie Ölfilter für eine Verbrennungskraftmaschine, mit einem auswechselbaren Filtereinsatz,
welcher einen ringförmigen, einen Innenraum umschließenden Querschnitt aufweist,
wobei der Auslaß für das gereinigte Fluid an den Innenraum anschließt,
und mit einer Ablassleitung zur Entleerung des Filters bei einem Filterwechsel,
wobei ein zentraler Ablassdom vorgesehen ist, der sich in den Innenraum erstreckt,
wobei der Ablassdom gemeinsam mit dem Filtereinsatz axialbeweglich gelagert ist zwischen einer ersten, die Ablassleitung verschließenden Schließstellung und einer zweiten, die Ablassleitung freigebenden Freigabestellung,
**dadurch gekennzeichnet,**
**dass** der Ablassdom (9)
■ filtergehäusefest angeordnet ist,
■ federbeaufschlagt in seine Freigabestellung gedrängt ist,
■ gegen die Federwirkung mittels des in das Filtergehäuse (2) eingesetzten Filtereinsatzes (4) in seine Schließstellung bewegbar ist, und
■ auch die Dichtfläche eines Filterumgehungsventils (11) ausbildet
oder den Ventilkörper eines Filterumgehungsventil (11) trägt.

2. Fluidfilter, wie Ölfilter für eine Verbrennungskraftmaschine, mit einem auswechselbaren Filtereinsatz,
welcher einen ringförmigen, einen Innenraum umschlie-ßenden Querschnitt aufweist,
wobei der Auslaß für das gereinigte Fluid an den Innenraum anschließt,
und mit einer Ablassleitung zur Entleerung des Filters bei einem Filterwechsel,
wobei ein zentraler Ablassdom vorgesehen ist, der sich in den Innenraum erstreckt,
wobei der Ablassdom gemeinsam mit dem Filtereinsatz axialbeweglich gelagert ist zwischen einer ersten, die Ablassleitung verschließenden Schließstellung und einer zweiten, die Ablassleitung freigebenden Freigabestellung,
**dadurch gekennzeichnet,**
**dass** der Ablassdom (9)
■ filtergehäusefest angeordnet ist,
■ federbeaufschlagt in seine Freigabestellung gedrängt ist,
■ gegen die Federwirkung mittels des in das Filtergehäuse (2) eingesetzten Filtereinsatzes (4) in seine Schließstellung bewegbar ist, und
■ auch ein Rücklauf-Sperrventil (24) ausbildet oder ein Rücklauf-Sperrventil (24) trägt.

3. Filter nach Anspruch 1 oder 2, **dadurch gekennzeichnet, dass** der Öffnungs- oder Schließzustand des zusätzlichen Ventils (11) durch die Stellung des axialbeweglichen Ablassdoms (9) gesteuert ist.

4. Filter nach Anspruch 1 oder 2, **dadurch gekennzeichnet, dass** das zusätzliche Ventil einen Ventilkörper (22, 25) aufweist, welcher mit einer unabhängig vom Ablassdom (9) vorgesehenen Dichtfläche (23, 27) zusammenwirkt.

5. Filter nach einem der vorhergehenden Ansprüche, **dadurch gekennzeichnet, dass** der Ablassdom (9) sich, einen Stützdom (5) für den Filtereinsatz (4) bildend, in den Innenraum (6) erstreckt.

6. Filter nach Anspruch 5, **dadurch gekennzeichnet, dass** der Ablassdom (9) zweiteilig ausgestaltet ist, mit zwei in axialer Richtung des Ablassdomes (9) hintereinander angeordneten Teilen.

7. Filter nach einem der vorhergehenden Ansprüche, **dadurch gekennzeichnet, dass** der Filtereinsatz (4) unter Verzicht auf ein separates Dichtungsbauteil unmittelbar an den Ablassdom (9) anschließt.

8. Filter nach einem der vorhergehenden Ansprüche, **dadurch gekennzeichnet, dass** ein Trennrohr (29) im Innenraum (6) vorgesehen ist, mit einer oberen Einströmöffnung für Reinfluid und mit einer unteren, an den Auslaß (7) anschließenden Ausströmöffnung, wobei das Trennrohr (29) in seinem unteren Bereich, dort den Zufluß von Rein- und/oder Rohfluid verhindernd, fluiddicht an die Wandung des Auslasses (7) anschließt.

9. Filter nach einem der vorhergehenden Ansprüche, **dadurch gekennzeichnet, dass** der Auslaß (7) seitlich an den Ablassdom (9) anschließt und die Ablassleitung (15) axial an den Ablassdom (9) anschließt.

## Claims

1. Fluid filter, e.g. an oil filter for a combustion engine with a replaceable filter element which has a ring-shaped cross-section enclosing an interior compartment, where the outlet for the filtered fluid is connected to the interior compartment, and with a discharge pipe for draining the filter during filter replacement,
where a central discharge dome which extends into the interior compartment is provided,
where the discharge dome is mounted to move in an axial direction jointly with the filter element between a first closing position which closes the discharge pipe, and a second opening position which opens the discharge pipe,
**characterised in**
**that** the discharge dome (9)
- is fixed to the filter housing,
- is forced into its opening position by the force of a spring,
- can be moved into its closing position against the force of the spring by means of the filter element (4) inserted into the filter housing (2), and
- also forms the sealing surface of a filter-bypass valve (11) or supports the valve body of a filter-bypass valve (11).

2. Fluid filter, e.g. an oil filter for a combustion engine with a replaceable filter element which has a ring-shaped cross-section enclosing an interior compartment,
where the outlet for the filtered fluid is connected to the interior compartment,
and with a discharge pipe for draining the filter during filter replacement,
where a central discharge dome which extends into the interior compartment is provided,
where the discharge dome is mounted to move in an axial direction jointly with the filter element between a first closing position which closes the discharge pipe, and a second opening position which opens the discharge pipe,
**characterised in**
**that** the discharge dome (9)
- is fixed to the filter housing,
- is forced into its opening position by the force of a spring,
- can be moved into its closing position against the force of the spring by means of the filter element (4) inserted into the filter housing (2), and
- also forms a non-return valve (24) or supports a non-return valve (24).

3. Filter according to claim 1 or 2, **characterised in**
**that** the open or closed state of the additional valve (11) is controlled by the position of the axially movable discharge dome (9).

4. Filter according to claim 1 or 2, **characterised in**
**that** the additional valve has a valve body (22, 25) which interacts with a sealing surface (23, 27) provided separately from the discharge dome (9).

5. Filter according to any of the preceding claims, **characterised in**
**that** the discharge dome (9) extends into the interior compartment (6) while forming a support dome (5) for the filter element (4).

6. Filter according to claim 5, **characterised in**
**that** the discharge dome (9) is formed in two parts with two parts arranged in succession in the axial direction of the discharge dome (9).

7. Filter according to any of the preceding claims, **characterised in**
**that** the filter element (4) is connected directly to the discharge dome (9) without a separate sealing component.

8. Filter according to any of the preceding claims, **characterised in**
**that** a separating tube (29) is provided in the interior compartment (6) with an upper inflow opening for clean fluid and a lower outflow opening connected to the outlet (7), where the lower part of the separating tube (29) is connected to the wall of the outlet (7) in such a way as to prevent the inflow of clean and/or raw fluid.

9. Filter according to any of the preceding claims, **characterised in**
**that** the outlet (7) is connected laterally to the discharge dome (9), and the discharge pipe (15) is connected axially to the discharge dome (9).

## Revendications

1. Filtre à fluide, tel qu'un filtre à huile pour un moteur à combustion interne, avec un insert de filtre interchangeable,
qui présente une section en forme d'anneau circulaire renfermant un espace intérieur,
dans lequel la sortie du fluide purifié se raccorde à l'espace intérieur,
et avec une conduite d'évacuation pour vider le filtre lors d'un changement de filtre,
dans lequel est prévu un dôme d'évacuation central qui s'étend dans l'espace intérieur,
dans lequel le dôme d'évacuation est supporté de manière mobile dans le sens axial en même temps que l'insert de filtre entre une première position de fermeture fermant la conduite d'évacuation et une deuxième position de dégagement libérant la conduite d'évacuation,
**caractérisé en ce que** le dôme d'évacuation (9)
• est disposé de façon solidaire du corps du filtre,
• est pressé par la force d'un ressort dans sa position de dégagement,
• peut être déplacé contre l'action du ressort dans sa position de fermeture au moyen de l'insert de filtre (4) inséré dans le corps de filtre (2),
• forme également la surface d'étanchéité d'une soupape de contournement du filtre (11)
ou porte le corps de la soupape de contournement du filtre (11).

2. Filtre à fluide, tel qu'un filtre à huile pour un moteur à combustion interne, avec un insert de filtre interchangeable,
qui présente une section en forme d'anneau circulaire renfermant un espace intérieur,
dans lequel la sortie du fluide purifié se raccorde à l'espace intérieur,
et avec une conduite d'évacuation pour vider le filtre lors d'un changement de filtre,
dans lequel est prévu un dôme d'évacuation central qui s'étend dans l'espace intérieur,
dans lequel le dôme d'évacuation est supporté de manière mobile dans le sens axial en même temps que l'insert de filtre entre une première position de fermeture fermant la conduite d'évacuation et une deuxième position de dégagement libérant la conduite d'évacuation,
**caractérisé en ce que** le dôme d'évacuation (9)
• est disposé de façon solidaire du corps du filtre,
• est pressé par la force d'un ressort dans sa position de dégagement,
• peut être déplacé contre l'action du ressort dans sa position de fermeture au moyen de l'insert de filtre (4) inséré dans le corps de filtre (2),
• forme également une soupape anti-retour (24)
ou porte une soupape anti-retour (24).

3. Filtre selon la revendication 1 ou 2, **caractérisé en ce que** l'état d'ouverture ou de fermeture de la soupape supplémentaire (11) est contrôlé par la position du dôme d'évacuation (9) mobile dans le sens axial.

4. Filtre selon la revendication 1 ou 2, **caractérisé en ce que** la soupape supplémentaire comporte un corps de soupape (22, 25) qui coopère avec une surface d'étanchéité (23, 27) indépendante du dôme d'évacuation (9).

5. Filtre selon l'une des revendications précédentes, **caractérisé en ce que** le dôme d'évacuation (9) s'étend, en formant un dôme d'appui (5) pour l'insert de filtre (4), dans l'espace intérieur (6).

6. Filtre selon la revendication 5, **caractérisé en ce que** le dôme d'évacuation (9) est formé de deux parties, avec des parties disposées l'une derrière l'autre dans le sens axial du dôme d'évacuation (9).

7. Filtre selon l'une des revendications précédentes, **caractérisé en ce que** l'insert de filtre (4) se raccorde directement au dôme d'évacuation (9) sans utiliser d'élément d'étanchéité séparé.

8. Filtre selon l'une des revendications précédentes, **caractérisé en ce qu'**il est prévu dans l'espace intérieur (6) un tube de séparation (29) avec une ouverture d'entrée supérieure pour le fluide purifié et une ouverture de sortie inférieure se raccordant à la sortie (7), le tube de séparation (29) se raccordant de manière étanche dans sa partie inférieure à la paroi de la sortie (7) en empêchant à cet endroit l'entrée de fluide purifié et/ou brut.

9. Filtre selon l'une des revendications précédentes, **caractérisé en ce que** la sortie (7) se raccorde latéralement sur le dôme d'évacuation (9) et la conduite d'évacuation (15) se raccorde axialement sur le dôme d'évacuation (9).
